# EUROPÄISCHE PATENTANMELDUNG

(11) **EP 4 101 561 A1**
(43) Veröffentlichungstag der Anmeldung: **14.12.2022**
(21) Anmeldenummer: 21178156.2
(22) Anmeldetag: 08.06.2021
(51) Int. Cl.: B22D 17/22, F16C 29/04, F16C 33/46

(54) **ZENTRIEREINRICHTUNG FÜR EIN FORMWERKZEUG MIT GLEICHZEITIG TRAGENDEN WÄLZKÖRPEREINHEITEN**

(71) Anmelder: Meusburger Georg GmbH & Co. KG, 6960 Wolfurt (AT)
(72) Erfinder: JUSSEL, Norman, 6837 Weiler (AT)
(74) Vertreter: Riebling, Peter

(57) **Zusammenfassung**

Zentriereinrichtung (1) für ein Formwerkzeug, insbesondere für ein Spritzgieß- oder Formblas- oder Druckgießwerkzeug, bestehend aus zwei gegeneinander gerichteten und formschlüssig miteinander verbindbaren Formhälften, welche durch Führungs- und Antriebsmittel geführt von einer geschlossenen Position in eine geöffnete Position und umgekehrt bewegbar sind, wobei die Zentriereinrichtung (1) aus mehreren, an der ersten Formhälfte vorstehend und der Trennfläche des Formwerkzeugs verteilt angeordneten Führungskörpern (2) besteht, wobei jeweils am vorderen Ende des Führungskörpers (2) ein axial gerichteter Führungsbolzen (20) angeformt ist, auf dessen Außenumfang ein Wälzkörperkäfig (3) mit mehreren Wälzkörpern (16) angeordnet sind, die in axialer Richtung hintereinander liegende und im gegenseitigen Abstand angeordnete Wälzkörperreihen (5-7) bilden, die sich beim Schließen der Formhälften lastübertragend an einer zugeordneten Innenfläche der Führungshülse (19) anlegen, wobei im Zustand kurz vor Erreichung der Zentrierung bis zur Endstellung der Zentrierung alle Wälzkörperreihen (5-7) parallel in Eingriff mit den hülsenseitigen Innenflächen (10-12) der Führungshülse (19) kommen und dadurch die Lagerkräfte aller Wälzkörperreihen (5-7) in diesem Fahrzustand gleichzeitig von der Führungshülse (19) aufnehmbar sind.

## Beschreibung

Gegenstand der Erfindung ist eine Zentriereinrichtung für ein Formwerkzeug mit beim Zentriereingriff tragenden Wälzkörpereinheiten nach dem Oberbegriff des Patentanspruches 1.

Ein solches Zentrierwerkzeug ist beispielsweise mit dem Gegenstand der EP 2 363 263 B1 bekannt geworden. Die genannte Druckschrift offenbart eine Zentriereinrichtung, bei welcher der zentrierende Führungskörper an seinem vorderen Ende als kreiszylindrischer Bolzen ausgebildet ist, auf welchem ein Wälzkörperkäfig mit in Reihen hintereinander liegend angeordneten Wälzkörpern aufgesetzt ist, der über Positioniermittel in geöffnetem Zustand derart positioniert ist, dass eine gegen die erste Formhälfte gerichtete erste Wälzkörperreihe auf der kreiszylindrischen Fläche des Bolzens aufliegt und die zweite Wälzkörperreihe an einer die kreiszylindrische Fläche des Bolzens abschließende umlaufende Kante anliegt, wobei in der gegenüberliegenden Führungshülse eine in axialer Richtung durchgehend gleichbleibenden Durchmesser angeordnet ist, so dass beim Schließen des Formwerkzeugs die Hülse auf die erste Wälzkörperreihe und auf die zweite Wälzkörperreihe aufläuft und die Zentrier- und Vorspannkräfte nur von der ersten und zweiten Wälzkörperreihe aufnehmbar sind. Die dritte Wälzkörperreihe bleibt dabei jedoch noch unbelastet, was mit dem Nachteil eines seriellen Zentriereingriffs verbunden ist, bei dem die Wälzkörperreihen nicht gleichzeitig, sondern im kurzen zeitlichen Abstand lastübertragend wirken.

Dieser Nachteil beruht darauf, dass eine an der Stirnseite des zentrierenden Führungsbolzens angeordnete umlaufende Kante vorhanden ist, durch welche die kreiszylindrische Fläche des Bolzens abgeschlossen wird. Diese umlaufende Kante ist als im Durchmesser verminderte Schräge ausgebildet, die für ein zeitversetztes Anheben von Wälzkörpern der ersten Wälzkörperreihe sorgen soll, was mit einer größeren Betriebsunsicherheit verbunden ist. Damit können bei einem Zentriereingriff nicht alle Wälzkörperreihen gleichzeitig Last übertragen, was mit dem Nachteil eines höheren Verschleißes der zuerst lastübertragend wirkenden Wälzkörperreihen verbunden ist.

Darüber hinaus besteht die Gefahr, dass die in radialer Richtung erfolgende Hubbewegung dieser Wälzkörperreihe durch eingedrungene Späne oder Fremdkörper im Wälzkörper verhindert wird, wodurch die Lastübertragung der Zentriereinrichtung noch zusätzlich eingeschränkt wird.

Die Anordnung einer Hub-Schräge an der vorderen Stirnseite des Führungsbolzens bedarf im Übrigen einer präzisen Bearbeitung des Führungsbolzens und muss stets von Verschmutzungen freigehalten werden, ansonsten es nicht zu dem gewünschten Hubeffekt kommen wird.

Durch die Anordnung einer Hubvorrichtung am vorderen Ende des Zentrierbolzens ergibt sich ein relativ langer Zentrierweg von beispielsweise 19 mm, bei dem zunächst zwei Reihen der Wälzkörper in Eingriff mit der gegenüberliegenden Führungshülse kommen und erst danach die dritte Wälzkörperreihe folgt.

Mit dem Gegenstand der CN1329977 A ist eine weitere Zentriereinrichtung bekanntgeworden, bei welcher der Zentrierbolzen in einer mit einem Wälzkörperkäfig ausgestatteten Führungshülse einläuft und sich dort zentriert. Dabei besteht der Nachteil, dass der Wälzkörperkäfig mit den darin angeordneten Wälzkörpern auf der Seite der Führungshülse angeordnet ist und nicht auf der Seite des Führungsbolzens. Damit sind Verschmutzungen im Innenraum der Führungshülse nur schwierig zu beseitigen und die Betriebssicherheit ist dadurch beeinträchtigt.

Diese Druckschrift und die nachfolgend erwähnten Druckschriften leiden alle unter dem Nachteil einer seriellen Lastübertragung der Wälzkörperreihen während des Zentriervorgangs. Das bedeutet, dass beim Zentriereingriff in nachteiliger Weise erst die vorderste Wälzkörperreihe die volle Last aufnehmen muss, bevor die dahinter angeordneten Wälzkörperreihen in den Zentriereingriff kommen. Daraus ergibt sich ein erhöhter Verschleiß, eine verkürzte Lebensdauer und schlechtere Zentriermaße.

Eine Zentriereinrichtung mit einem bewegbaren Wälzkörperkäfig ist aus der US 2,774,430 A bekannt geworden. Auch bei dieser bekannten Anordnung besteht der Nachteil, dass eine Hubbewegung der Wälzkörperreihen beim Vorbeilaufen an einer führungshülsenseitigen Schräge vorausgesetzt wird.

Mit dem Gegenstand der US 4,664,534 A ist eine weitere Zentriervorrichtung bekannt geworden, bei der ebenfalls eine Hubbewegung der Wälzkörperreihen vorausgesetzt wird.

In der JP2001121226 A wird eine Zentriervorrichtung mit einem bewegbar angeordneten Wälzkörperkäfig und darin angeordneten Wälzkörpern beschrieben, wobei jedoch zwei federbelastete Positioniervorrichtungen verwendet werden, die für eine Positionierung des Wälzkörperkäfigs sorgen sollen. Eine gleichzeitige Trageigenschaft der Wälzkörperreihen kurz vor Erreichung der Endstellung der Zentriervorrichtung ist aus dieser Druckschrift nicht zu entnehmen, genauso wenig wie aus der JP56-12522.

Der Erfindung liegt deshalb ausgehend von der EP 2 363 263 B1 die Aufgabe zugrunde, eine Zentriereinrichtung für ein Formwerkzeug so weiterzubilden, dass bei geringerer Zentrierlänge (Fahrweg) eine verbesserte Lastübertragung bei gleichzeitig erhöhter Betriebssicherheit gewährleistet ist.

Zur Lösung der gestellten Aufgabe ist die Erfindung durch die technische Lehre des Anspruches 1 gekennzeichnet.

Nach einer bevorzugten Ausgestaltung ist vorgesehen, dass die Wälzkörperreihen kurz vor Erreichung des Zentriereingriffs bis zur Endstellung des Zentriereingriffs gleichzeitig und parallel tragen.

Das bedeutet, dass bei einem Zentriereingriff der Zentriervorrichtung im Zustand kurz vor Erreichung des Zentriereingriffs bis zur Endstellung des Zentriereingriffs die Lastübertragung nicht nacheinander folgend auf die im Wälzkörperkäfig hintereinander angeordneten Wälzkörperreihen erfolgt, sondern gleichzeitig auf alle Wälzkörperreihen parallel wirkt.

Merkmal der Erfindung ist demnach, dass beim Zentriereingriff zwischen Führungsbolzen und Führungshülse, das ist der Zustand kurz vor Erreichung des Zentriereingriffs bis zur Endstellung des Zentriereingriffs, sofort alle Wälzkörperreihen gleichzeitig tragen. Es handelt sich demnach um einen parallelen Wälzkörpereingriff aller Wälzkörperreihen auf dem Wälzkörperkäfig in die gegenüberliegende Führungshülse, obwohl diese hintereinander liegend im Wälzkörperkäfig auf dem Führungsbolzen angeordnet sind.

Dies wird nach einem weiteren bevorzugten Merkmal der Erfindung dadurch erreicht, dass die hülsenseitige Innenfläche der Führungshülse in mehrere, aneinander anschließende und im Durchmesser abgestufte Innenflächen unterteilt ist, die einen abgestuften, unterschiedlichen Innendurchmesser aufweisen und dass ferner die an diesen Innenflächen sich abwälzenden Wälzkörper der hintereinander liegenden Wälzkörperreihen einen zu den abgestuften Innenflächen der Führungshülse komplementären Durchmesser aufweisen, so dass der vorher beschriebene, als nachteilig angesehene Hubeffekt gemäß der EP 2 363 263 B1 entfällt und stattdessen die Wälzkörper der hintereinander liegenden Wälzkörperreihen auf einer linearen Verschiebungsbahn in die einen abgestuften Innendurchmesser aufweisenden Innenflächen der Führungshülse einfahren, so dass eine Hubbewegung vermieden wird und ein gleichzeitige parallele Lastübertragung aller Wälzkörperreihen stattfindet.

Der Vorteil der Erfindung liegt demnach darin, dass im Zustand kurz vor Erreichung des Zentriereingriffs bis zur Endstellung des Zentriereingriffs alle Wälzkörperreihen gleichzeitig in Eingriff mit den hülsenseitigen Innenflächen kommen und dadurch die Kräfte aller Wälzkörperreihen in diesem Fahrzustand gleichzeitig von der Führungshülse aufnehmbar sind.

Ein weiterer Vorteil der Erfindung liegt darin, dass eine kürzere Zentrierstrecke von bevorzugt z. B. 14 mm erreichbar ist, während beim Stand der Technik eine Mindestverfahrlänge von 19 mm notwendig ist, weil bei dieser relativ langen Verfahrlänge vorausgesetzt wird, dass erst zwei Wälzkörperreihen in Eingriff kommen und danach die dritte Wälzkörperreihe.

Bei der vorliegenden Erfindung kommen hingegen alle verwendeten Wälzkörperreihen parallel und gleichzeitig in Eingriff, wodurch der Zentrierweg auf 14 mm oder noch darunter reduziert werden kann.

Selbstverständlich ist die Erfindung nicht auf die Anordnung von drei hintereinander liegenden Wälzkörperreihen beschränkt. Es können auch zwei oder vier Wälzkörperreihen oder auch mehr als vier Wälzkörperreihen verwendet werden, so dass die technische Lehre der Patentansprüche analog auf die Anzahl der verwendeten Wälzkörperreihen anzuwenden ist.

Weiterer Vorteil der Erfindung ist, dass wegen der kürzeren Eingriffslänge von bevorzugt 14 mm oder weniger auch eine kürzere Führungshülse und ein dazugehörender komplementärer Führungsbolzen verwendet werden kann.

Der Abstand zwischen der ersten und der dritten Wälzkörperreihe beim Stand der Technik beträgt beispielsweise 11 mm, während der Abstand zwischen der ersten und der dritten Wälzkörperreihe bei der Erfindung z.B. bevorzugt 14 mm oder weniger beträgt.

In einer bevorzugten Ausgestaltung der vorliegenden Erfindung ist nach dem Gegenstand des Patentanspruches 3 vorgesehen, dass der Durchmesser der Wälzkörper von der vorderen Stirnkante des Führungsbolzens aus gesehen nach hinten abgestuft zunimmt und dass der Innendurchmesser der dem Wälzkörper zugeordneten hülsenseitigen Innenflächen von der Einlaufkante der Führungshülse gesehen nach hinten komplementär abgestuft abnimmt.

Damit wird ein gleichzeitiger Eingriff aller Wälzkörperreihen kurz vor dem Formschluss erreicht und die vorherige Einfahrbewegung führt dazu, dass eventuelle Verkantungs- und Achsenfehler durch das spielbehaftete Einfahren des mit Wälzkörpern belegten Führungsbolzens in die Führungshülse besonders sicher und schonend erfolgt.

Nachdem keine Hubbewegungen mehr an den Wälzkörpern des Wälzkörperkäfigs notwendig sind, ist die Zentriereinrichtung auch betriebssicherer ausgelegt und gegen Eindringen von Spänen und Fremdkörpern besser geschützt. Beim Stand der Technik hat gerade die vordere Wälzkörperreihe ein unerwünschtes radiales Hubspiel und ist empfindlich für Verschmutzungen.

In einer bevorzugten Ausgestaltung ist nach dem Gegenstand des Anspruches 4 vorgesehen, dass insgesamt drei hintereinander liegend angeordnete Wälzkörperreihen mit drei hülsenseitig angeordneten, abgestuften Innenflächen zusammenwirken.

Wie vorhin ausgeführt, ist die Erfindung darauf jedoch nicht beschränkt. Es können auch zwei hintereinanderliegend angeordnete Wälzkörperreihen oder vier oder mehr Wälzkörperreihen mit komplementär angeordneten, hülsenseitigen und abgestuften Innenflächen der Führungshülse zusammenwirken.

Von besonderem Vorteil ist nach dem Gegenstand des Anspruches 7, dass während des Schließens der Formhälften zunächst die erste und danach die zweite Wälzkörperreihe des Führungsbolzens unter Beibehaltung eines radialen Spiels auf die einlaufseitigen, abgestuften Innenflächen der Führungshülse einfahren. Damit können Verkantungs- und Fluchtungsfehler leicht zentriert werden.

Nach dem Gegenstand des Anspruches 8 ist dabei vorgesehen, dass während der spielbehafteten Überfahrung der einlaufseitigen Innenflächen der Führungshülse der Wälzkörperkäfig stehenbleibt.

Es wird im Übrigen darauf hingewiesen, dass der gesamte Offenbarungsinhalt der EP 236 263 B1 auch Grundlage der vorliegenden Erfindung ist, so dass die grundsätzliche Funktion einer Zentriereinrichtung in Verbindung mit Formwerkzeugen aus dieser Druckschrift zu entnehmen sind.

Von besonderem Vorteil nach dem Gegenstand des Anspruches 9 ist, dass mit fortschreitender Einfahrbewegung die hintere Wälzkörperreihe auf deren Einfahrrichtung vorneliegenden Innenfläche der Führungshülse aufläuft und sich dort lastübertragend anlegt und dass sich dabei die beiden vorderen Wälzkörperreihen an den Ihnen zugeordneten, hinteren hülsenseitigen Innenflächen lastübertragend anlegen.

Dabei kommt es zu einer spielfreien Zentrierung auf einem sehr kurzen Verfahrweg von bevorzugt 14 mm, während beim Stand der Technik ein längerer Verfahrweg von 19 mm erforderlich war, um erst die beiden ersten Reihen in Eingriff zu bringen und danach die letzte Reihe. Dies erfolgt bei der Erfindung gleichzeitig, so dass eine verbesserte Zentrierung bei einer verbesserten Lastübertragung die Folge ist.

Von besonderem Vorteil ist nach dem Gegenstand des Patentanspruches 8, dass während der spielbehafteten Überfahrung der einlaufseitigen Innenflächen der Wälzkörperkäfig stehenbleibt und dass nach dem Eingriff der dritten Wälzkörperreihe - kurz bevor die Formhälften schließen - der Wälzkörperkäfig von der Führungshülse mitgenommen wird.

Von besonderem Vorteil ist nach dem Gegenstand des Anspruches 11, dass der Durchmesser der Wälzkörper um 0,05 mm pro Wälzkörperreihe ansteigt und dass der Innendurchmesser der Innenflächen der Führungshülse komplementär um jeweils im Bereich von etwa 0,05 mm bis 0,01 pro Innenfläche abnimmt.

Auf die angegebenen, bevorzugten Maße ist die Erfindung nicht beschränkt. Das angegebene Maß der Abstufung von 0,05 mm kann in weiten Grenzen verändert werden. Es wird hierbei ein Abstufungsbereich von 0,02 mm bis 1,15 mm vorgesehen.

Von weiterem Vorteil ist nach dem Gegenstand des Anspruches 12, dass der Wälzkörperkäfig so auf dem Führungsbolzen positioniert ist, dass die vorderste Wälzkörperreihe einen Abstand von bevorzugt im Bereich zwischen 0,5 mm bis 1,0 mm von der vorderen Stirnkante des Führungsbolzens hat. Damit wird die als nachteilig angesehene Hubbewegung nach dem Gegenstand der EP 2 263 263 B1 ausgeschlossen, denn damit ist klargestellt, dass die führungsbolzenseitige Lauffläche, auf welcher die Wälzkörper des Wälzkörperkäfigs abrollen, geradlinig zylindrisch ist und in einer vorderen, stirnseitigen einfachen Fase oder einem geringen Radius endet, so dass verhindert wird, dass die Wälzkörper im Wälzkörperkäfig über diese einfache Fase eine unerwünschte Hubbewegung ausführen, was Gegenstand der EP 2 363 263 B1 ist.

Damit ergibt sich ein vorteilhafter Effekt nach dem Gegenstand des Anspruches 13, dass nämlich bei vollständigen Einlaufen der Wälzkörperreihen auf den zugeordneten, abgestuften hülsenseitigen Innenflächen alle drei Wälzkörperreihen gleichzeitig in Eingriff mit den Innenflächen kommen und der Wälzkörperkäfig beginnt, sich mit der halben Geschwindigkeit der Führungshülse zu bewegen, so dass auftretende Zentrierkräfte gleichzeitig von allen Wälzkörperreihen aufnehmbar sind.

Bei einem herkömmlichen Formwerkzeug, welches bevorzugt als Spritz- oder Druckgießwerkzeug ausgebildet ist, hat sich gemäß dem Anspruch 14 als besonders vorteilhaft herausgestellt, dass bei einem Bolzen mit einem Durchmesser von vorzugsweise 32 mm der Durchmesser der vorderen bolzenseitigen Wälzkörper der vorderen Wälzkörperreihe bevorzugt im Bereich von etwa 3,90 mm +/- 0,5 mm beträgt und dass der Durchmesser der zugeordneten Innenfläche der Führungshülse als Rollpassung bevorzugt auf 39,8 mm +/- 0,5 mm ausgelegt ist Bei anderen Ausführungsformen wird hingegen der Durchmesser der Wälzkörper nur noch 1 mm oder mehr betragen und der Durchmesser der Führungshülse ist dem angepasst. Der Hülsendurchmesser kann dabei im Bereich zwischen 15 mm und 60 mm bevorzugt variieren.

Eine gleiche Durchmesserwahl ergibt sich nach dem Gegenstand des Anspruches 15 für die mittleren Wälzkörper der mittleren Wälzkörperreihe, die bevorzugt einen Durchmesser von 3,95 mm +/- 0,5 mm aufweisen, wobei der Durchmesser der zugeordneten Innenfläche der Führungshülse als Rollpassung ebenfalls bevorzugt auf 39,9 mm +/- 0,5 mm ausgelegt ist.

Ein gleicher Gegenstand ergibt sich für diesen Anwendungsfall auch nach dem Gegenstand des Anspruches 16 für den Durchmesser der hinteren Wälzkörper der hinteren Wälzkörperreihe, die bevorzugt einen Durchmesser von 4,0 mm +/- 0,5 mm aufweisen, wobei der Durchmesser der zugeordneten Innenfläche der Führungshülse als Rollpassung auf bevorzugt 40,0 mm +/- 0,5 mm ausgelegt ist.

Mit der erfindungsgemäßen Zentriereinrichtung ergibt sich somit nach dem Gegenstand des Anspruches 17 der Vorteil, dass auf einem relativ kurzen Verfahrweg von 14 mm alle drei Wälzkörperreihen mit den zugeordneten Innenflächen am Innenumfang der Führungshülse in Eingriff kommen. Damit wird der weitere Gegenstand nach dem Anspruch 17 erreicht, dass alle bolzenseitigen Wälzkörperreihen gleichzeitig in Eingriff mit den hülsenseitigen Innenflächen der Führungshülse kommen und dadurch die Kräfte von drei oder mehr Wälzkörperreihen gleichzeitig vom Führungsbolzen aufgenommen werden. Dies gewährleistet demnach einen gleichzeitigen lastübertragenden Eingriff der Wälzkörperreihen, was beim Stand der Technik nicht der Fall war, denn beim Stand der Technik waren erst lastübertragend zwei Wälzkörperreihen in Eingriff, bis dann nach Überwindung eines Verfahrweges auch die letzte Wälzkörperreihe in Eingriff kam.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert einen Schnitt gemäß der Linie A-A in Figur 2 durch eine Zentriereinrichtung in der Anfangsstellung
- Figur 2:: die Führung der Schnittlinie A-A durch die Zentriereinrichtung nach Figur 1 ohne Darstellung der Wälzkörper
- Figur 3:: der Schnitt gemäß der Linie B-B gemäß Figur 4 durch die Zentriereinrichtung beim spielbehafteten Eintauchen der ersten Wälzkörperreihe in die Führungshülse
- Figur 4:: die Angabe der Schnittführung des Schnittes B-B
- Figur 5:: der Schnitt gemäß der Linie C-C in Figur 6 beim spielbehafteten Eintauchen der ersten und zweiten Wälzkörperreihe in die Führungshülse
- Figur 6:: die Angabe der Schnittlinie C-C in der Anordnung nach Figur 5
- Figur 7:: der Anfangszustand der vollständigen Zentrierung aller drei Wälzkörperreihen in der Zentriereinrichtung
- Figur 8:: die Angabe der Schnittführung des Schnittes D-D
- Figur 9:: Schnitt durch die Zentriereinrichtung in der Endstellung, bei der alle Wälzkörperreihen lastübertragend an den zugeordneten abgestuften Innenflächen der Führungshülse anliegen
- Figur 10:: der Schnitt durch die Anordnung nach Figur 9 mit Darstellung der Schnittführung E-E
- Figur 11:: die Seitenansicht des vorderen Teils des Führungsbolzens
- Figur 12:: das vergrößerte Detail X aus Figur 11
- Figur 13:: eine ähnliche Darstellung wie Figur 1 der Zentriereinrichtung im Schnitt, wobei im oberen Teil - oberhalb der Schnittlinie 25 - die Erfindung dargestellt ist und im unteren Teil - unterhalb der Schnittlinie - der Stand der Technik nach der EP 2 363 263 B1 dargestellt ist
- Figur 14:: eine ähnliche Darstellung wie Figur 3 mit den gleichen Verhältnissen, wie in Figur 13 beschrieben, in einem fortgeschrittenen Einfahrzustand der Zentriereinrichtung
- Figur 15:: eine ähnliche Darstellung wie Figur 5 mit den gleichen Verhältnissen, wie in Figur 13 beschrieben, in einem weiter fortgeschrittenen Einfahrzustand der Zentriereinrichtung
- Figur 16:: eine ähnliche Darstellung wie Figur 7 mit den gleichen Verhältnissen, wie in Figur 13 beschrieben, in einem weiter fortgeschrittenen Einfahrzustand der Zentriereinrichtung kurz vor Erreichung der parallelen Lastübertragung aller Wälzkörperreihen
- Figur 17:: eine ähnliche Darstellung wie Figur 9 mit den gleichen Verhältnissen, wie in Figur 13 beschrieben, im Endzustand der Zentriereinrichtung

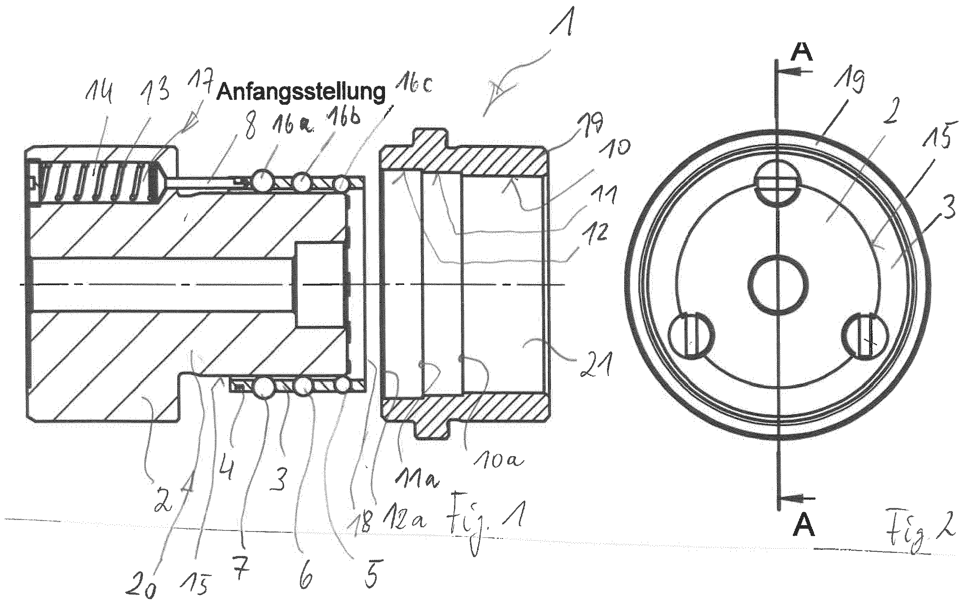

In den Figuren 1 und 2 ist eine Zentriereinrichtung 1 in der Anfangsstellung dargestellt, bei der noch keine Zentrierung stattfindet. Es ist zeichnerisch nicht dargestellt, dass beispielsweise der Führungskörper 2 stirnseitig mit einer ersten Formhälfte verbunden ist, während die gegenüberliegende Führungshülse 19 als Teil der Zentriereinrichtung an der gegenüberliegenden Formhälfte befestigt ist.

Einzelheiten des Aufbaus einer Formhälfte mit einer Zentriereinrichtung 1 sind beispielsweise aus der EP 2 363 263 B1, sowie den übrigen in der Beschreibungseinleitung genannten Druckschriften zu entnehmen.

Der Führungskörper 2 ist im wesentlichen rundzylindrisch ausgebildet und weist an seinem vorderen Ende einen Führungsbolzen 20 verminderten Durchmessers auf, der an seiner Stirnseite eine Stirnkante 9 aufweist.

Am Außenumfang des Führungsbolzens 20 sind gleichmäßig am Umfang verteilt angeordnete Positioniermittel 17 vorgesehen. Jedes Positioniermittel 17 besteht aus einer axialen Sackbohrung 14 im Führungsbolzen 20, in der eine Druckfeder 13 angeordnet ist, die gegen einen axial verschiebbaren Druckstempel 8 wirkt, der sich mit seinem gegenüberliegenden Ende an der linksseitigen Stirnkante eines frei in axialer Richtung auf den Führungsbolzen 20 verschiebbaren Wälzkörperkäfigs 3 befestigt ist.

Der Wälzkörperkäfig 3 kann an seiner Rückseite einen Sicherungsring 4 tragen. Der Sicherungsring dient zur Verbindung vom Bolzen 8 zum Wälzkörperkäfig 3.

In den Figuren 1 bis 10 sind im Wälzkörperkäfig 3 - als bevorzugtes Ausführungsbeispiel - drei in axialer Richtung hintereinanderliegende Wälzkörperreihen 5, 6, 7 mit jeweils einer Anzahl von Wälzkörpern 16a, 16b und 16c angeordnet, deren Durchmesser zur besseren Verdeutlichung der Erfindung in zeichnerisch übertriebenem Maßstab gezeichnet sind.

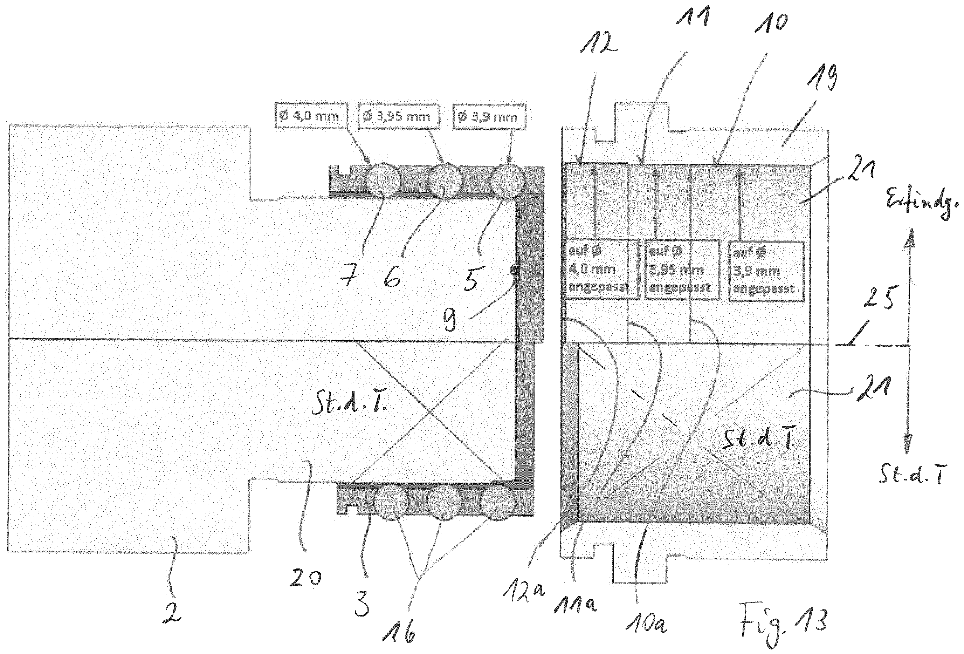

Eine bevorzugte Ausgestaltung eines realen Durchmessers der Wälzkörper 16a, 16b und 16c ist beispielsweise aus der Figur 13 und der allgemeinen Beschreibung der vorliegenden Erfindung zu entnehmen. Die angegebenen tatsächlichen Durchmesser nach Figur 13 sind nur beispielhaft als bevorzugte Ausführungen zu verstehen und beschränken den Schutzumfang der Erfindung nicht.

Kennzeichnend für die besondere Art des Wälzkörperkäfigs mit den darin angeordneten Wälzkörpern 16 ist, dass die vorderste Wälzkörperreihe 5 mit den Wälzkörpern 16c einen kleineren Durchmesser aufweist, während die mittlere Wälzkörperreihe 6 mit den Wälzkörpern 16b einen größeren Durchmesser aufweist und dass die hintere Wälzkörperreihe 7 mit den die Wälzkörpern 16a den größten Durchmesser aller vorhandenen Wälzkörper 16 zeigt.

Dem gegenüberliegend sind zu den Wälzkörperreihen 5- 7 mit im Durchmesser abgestuften Wälzkörpern 16-16c komplementäre Durchmesser-Abstufungen am Innenumfang 21 der Führungshülse 19 angeordnet, die mit der gegenüberliegenden Formhälfte verbunden ist.

Von der einlaufseitigen Übergangskante 12a ausgehend hat die erste, nächst der Übergangskante 12a liegende Innenfläche 12 einen größeren Innendurchmesser als vergleichsweise die danach abgestuft folgende, mittlere Innenfläche 11, wobei der Übergang zwischen beiden Innenflächen 11 und 12 durch eine Übergangskante 11a gebildet ist.

In gleicher Weise erfolgt der abgestufte Übergang von der mittleren Innenfläche 11 mit größerem Durchmesser über eine Übergangskante 10a in die hintere Innenfläche 10 mit dem geringsten Innendurchmesser.

Demnach sind den Wälzkörpern 16a, 16b und 16c auf dem Führungsbolzen 20 die komplementären, abgestuften Innenflächen 12, 11, 10 in der Führungshülse 19 zugeordnet.

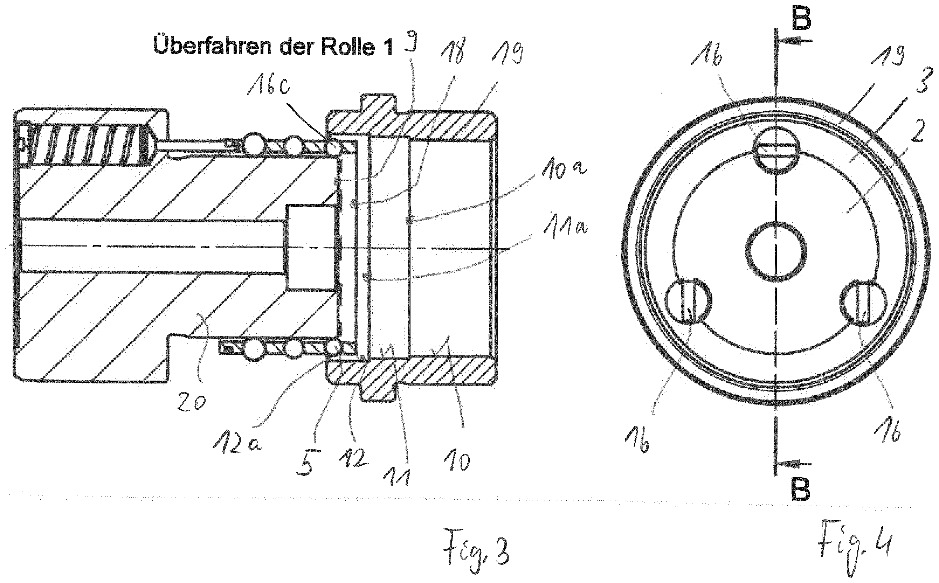

In der Figur 2 sind die Wälzkörper nicht eingezeichnet, sie sind jedoch bevorzugt als Wälzkörperrollen ausgebildet. Es ist jedoch auch möglich, die Wälzkörper als Kugel- oder als Tonnen-Wälzkörper auszubilden. Die Figuren 3 und 4 zeigen den ersten Bewegungszustand der Zentriereinrichtung 1 beim Einfahren des Führungsbolzens 20 in die gegenüberliegende Führungshülse 19, wo erkennbar ist, dass die mit einem geringeren Durchmesser ausgestatteten Wälzkörper 16c der ersten Wälzkörperreihe 5 unter Beibehaltung eines radialen Spiels spielbehaftet durch die Innenfläche 12 vergrößerten Durchmessers fahren.

Sollte in diesem Zustand bereits schon eine Verkantung zwischen der Führungshülse 19 und dem Führungsbolzen 20 vorhanden sein, wird dies durch Anschlagen der Wälzkörper 16c an den Wandungen der Innenfläche 12 ausgeglichen. Eine Zentrierung mit hoher Lastübertragung findet aber noch nicht statt.

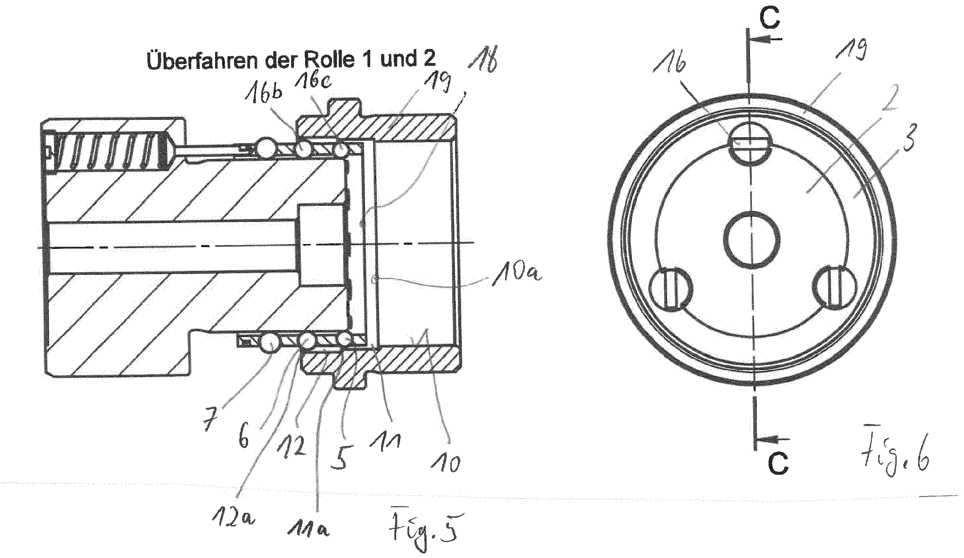

Die Figuren 5 und 6 zeigen den zweiten Fahrzustand der Zentriereinrichtung 1, wobei die beiden vordersten Wälzkörperreihen 5 und 6 in die Führungshülse 19 eingefahren sind und die vorderste Wälzkörperreihe 5 die Übergangskante 11a zur Innenfläche 11 überwunden hat und aufgrund ihres geringen Durchmessers ebenfalls unter Beibehaltung eines radialen Spiels einen spielbehafteten radialen Abstand zur Innenfläche 11 aufweist.

Selbstverständlich haben auch die Wälzkörper 16b beim Einfahren in die vorderste Innenfläche 12 ein radiales Spiel zum Innenumfang dieser Innenfläche 12.

Auch bei diesem Verfahrenszustand werden Verkantungsstöße und Winkelstellungen zwischen dem Führungsbolzen 20 und der Führungshülse 19 schonend und gleichmäßig ausgeglichen.

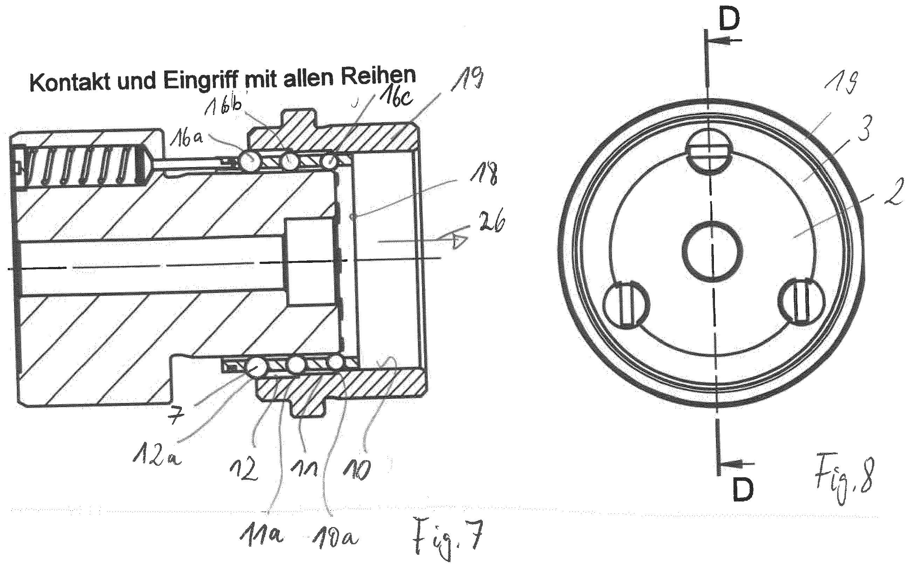

Erst im Fahrzustand nach den Figuren 7 und 8 kommen alle Wälzkörperreihen 5, 6, 7 in parallelen und gleichzeitigen Eingriff mit den ihnen zugeordneten Innenflächen 12, 11, 10, wobei die Zeichnung Figur 7 gerade zeigt, dass die vordere Wälzkörperreihe 5 gerade die hintere Übergangskante 10a überfährt und gerade in der Art einer Rollpassung formschlüssig in den Innenumfang der hinteren Innenfläche 10 einfährt.

Unter Bezugnahme auf die Figuren 1 bis 7 wird noch angegeben, dass das Positioniermittel 17 die anfängliche Stellung des Wälzkörperkäfigs 3 gemäß den Figuren 1 bis 7 so positioniert, dass die vordere Stirnkante 18 des Wälzkörperkäfigs 3 einen geringen Überstand über die Stirnkante 9 des Führungsbolzens 20 hat.

Damit ist sichergestellt, dass die vordere Wälzkörperreihe 5 mit den darin angeordneten Wälzkörpern 16 hinter der führungsbolzenseitigen Stirnkante 9 zurücksteht und dass diese Stirnkante 9 gerade nicht für eine Absenkung und eine unerwünschte Hubbewegung sorgt, sondern für ein geradliniges Überfahren dieser lediglich mit einer einfachen Fase oder einem Kantenbruch ausgebildeten Stirnkante 9.

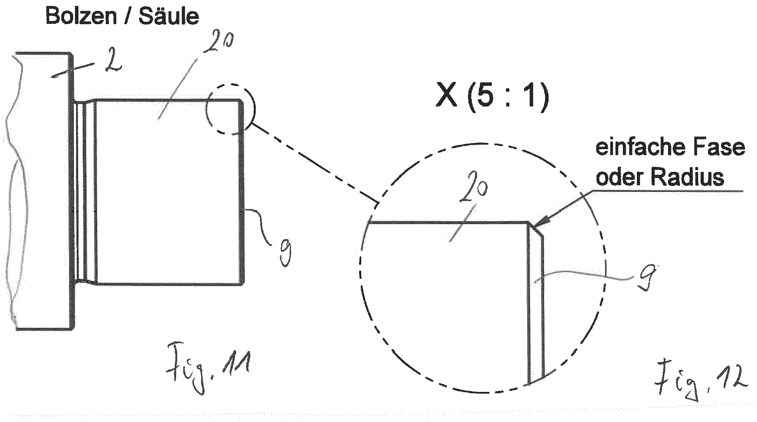

Dies ist in den Figuren 11 und 12 näher dargestellt.

Nachdem anhand der Figuren 7 und 8 das fast vollständige Einfahren der drei Wälzkörperreihen 5-7 dargestellt ist, führt diese Stellung in Figur 7 bei weiterem Einfahren des Führungsbolzens 20 in Pfeilrichtung 26 in die Führungshülse 19 zu einem gleichzeitigen Tragen aller drei Wälzkörperreihen 5, 6, 7 an den zugeordneten, abgestuften Innenflächen 12, 11, 10 der Führungshülse 19.

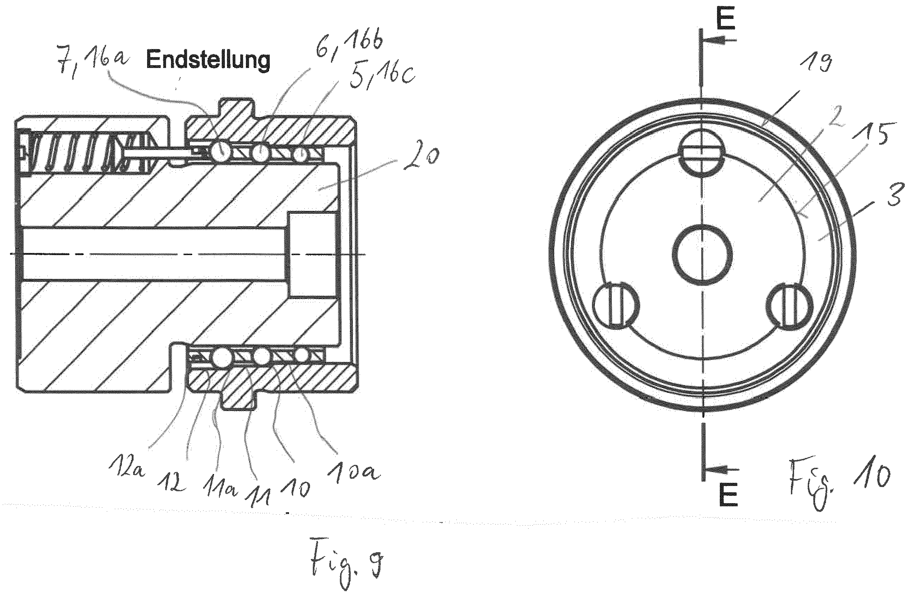

Die Figur 7 zeigt somit den Anfangszustand des gleichzeitigen Eingriffs aller Wälzkörperreihen 5, 6, 7 auf den zugeordneten, abgestuften Innenflächen 12, 11, 10, wobei mit weiterer (kurzer) Einschubbewegung in Pfeilrichtung 26 die in den Figuren 9 und 10 dargestellte Endstellung der Zentriereinrichtung 1 erreicht ist.

In dieser Endstellung haben alle Wälzkörperreihen 5, 6, 7 mit ihren zugeordneten Wälzkörpern 16c, 16b und 16a die zugeordneten Übergangskanten 10a, 11a und 12a überfahren und liegen nun formschlüssig in der Art einer lastübertragenden Rollpassung an den zugeordneten Innenflächen 12, 11,10 an, so dass alle drei Wälzkörperreihen 5, 6, 7 während des Übergangs von der Figur 7 in die Figur 9 während eines kurzen Verschiebeweges vor der Überwindung der jeweiligen Übergangskanten bis zur Endstellung in Figur 9 gleichzeitig tragen und lastübertragend zentrieren. Ein Verschleiß nur einer einzigen, anfänglich zentrierenden Wälzkörperreihe, wie es beim Stand der Technik der Fall ist, wird hier vermieden.

Unter Hinweis auf die vorherige Beschreibung ist in den Figuren 11 und 12 angegeben, dass die Stirnkante 9 an der Vorderseite des Führungsbolzens 20 leicht und ohne Hubbewegung von den Wälzkörpern 16 berührungslos überfahren werden kann.

Die Figuren 13 bis 17 zeigen in einem Simulationsmodell einen Vergleich der erfindungsgemäßen Zentriervorrichtung, die jeweils oberhalb der Schnittlinie 25 im Halbschnitt dargestellt ist, zu der unterhalb der Schnittlinie 25 dargestellten Anordnung einer Zentriereinrichtung nach dem Stand der Technik gemäß der EP 2 363 263 B1 ausgebildet ist. Gleiche Teile sind mit gleichen Bezugszeichen versehen.

Es wird angemerkt, dass die Erläuterungen, die in den Figuren 1 bis 10 gegeben wurden, in analoger Weise auch für das konkrete Ausführungsbeispiel nach den Figuren 13 bis 17 gelten.

Die in Figur 13 in den umrandeten Kästchen angegebenen, bevorzugten Dimensionen der Durchmesser der Wälzkörper der ersten, zweiten und dritten Wälzkörperreihe 5-7 und die komplementären Innendurchmesser der Innenflächen 10, 11, 12 der Führungshülse 19 sind nur beispielhaft zu verstehen und sollen zeigen, dass bei einer konkreten Ausführung einer Zentriereinrichtung die angegebenen Durchmesserverhältnisse zu einer überlegenen Zentrierwirkung bei kürzerem Zentrierweg führen.

So zeigt in Figur 13 der Vergleich mit dem Stand der Technik im unteren Teil der Figur auch, dass an der vorderen Stirnkante 9 des Führungsbolzens 20 eine Führungsschräge verminderten Durchmessers angeordnet ist, die zu einer Hubbewegung der Wälzkörper der vorderen Wälzkörperreihe 5 führt. Dies ist bei der Erfindung vermieden.

Ebenso zeigt der Vergleich mit dem Stand der Technik gemäß Figur 13, dass der Innenumfang 21 der Führungshülse 19 beim Stand der Technik vollkommen durchgehend einen gleichen Innendurchmesser aufweist, während bei der Erfindung (siehe oberer Halbschnitt in Figur 13) ein abgestufter Innendurchmesser mit den Innenflächen 12, 11, 10 und den dazugehörenden, bevorzugten Innendurchmessern angegeben ist.

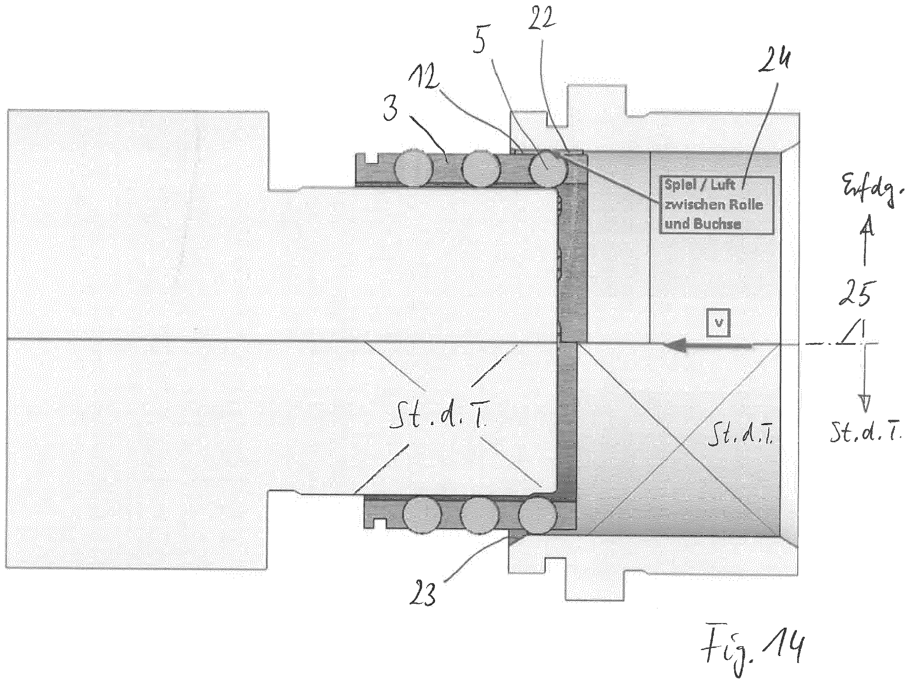

In Figur 14 ist im unteren Halbschnitt dargestellt, dass beim Stand der Technik auch eine stirnseitige Einlaufschräge 23 zur Durchführung einer Hubbewegung der darüber laufenden Wälzkörper notwendig ist, während dies bei der Erfindung vermieden wird. Bei der Erfindung wird der Wälzkörperkäfig 3 mit den darin angeordneten Wälzkörpern 16 in einer linearen Bewegung auf dem Außenumfang des Führungsbolzens 20 geführt, ohne dass Hubbewegungen stattfinden.

Gleichfalls zeigt die Figur 14 in Analogie zur Figur 3, dass die vordersten Wälzkörper 16c der Wälzkörperreihe 5 unter Beibehaltung eines radialen Spiels in die einen größeren Innendurchmesser aufweisende Innenfläche 12 einfahren.

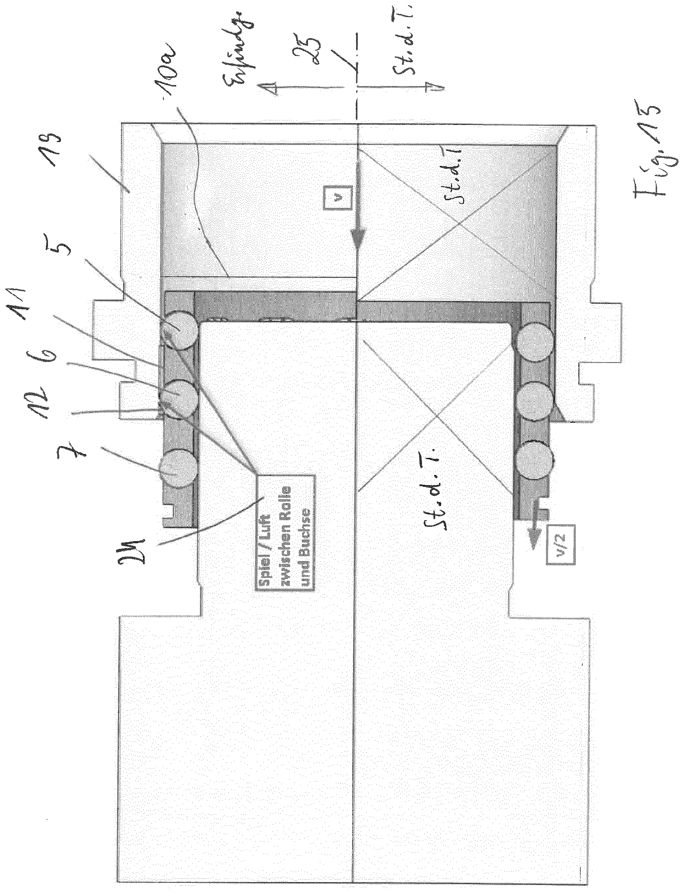

Die Figur 15 zeigt einen Zustand, der zeichnerisch in Figur 5 und 6 dargestellt ist, wobei erkennbar ist, dass auch die Wälzkörper 16c und 16b der beiden Wälzkörperreihen 5, 6 unter Beibehaltung eines radialen Spiels die vordere Innenfläche 12 und die danach folgende Innenfläche 11 verminderten Durchmessers durchfahren, ohne dass es zu einer Anlage an den Innenumfang in diesen Bereich kommt. Im Vergleich dazu ist im unteren Halbschnitt der Figur 15 beim Stand der Technik dargestellt, dass die Wälzkörper der vorderen Wälzkörperreihe 5 noch in dem Bereich der Schräge sind und nicht tragen, während auch die Wälzkörper der mittleren Wälzkörperreihe 6 noch im Bereich der stirnseitigen Schräge der Führungshülse 19 sind.

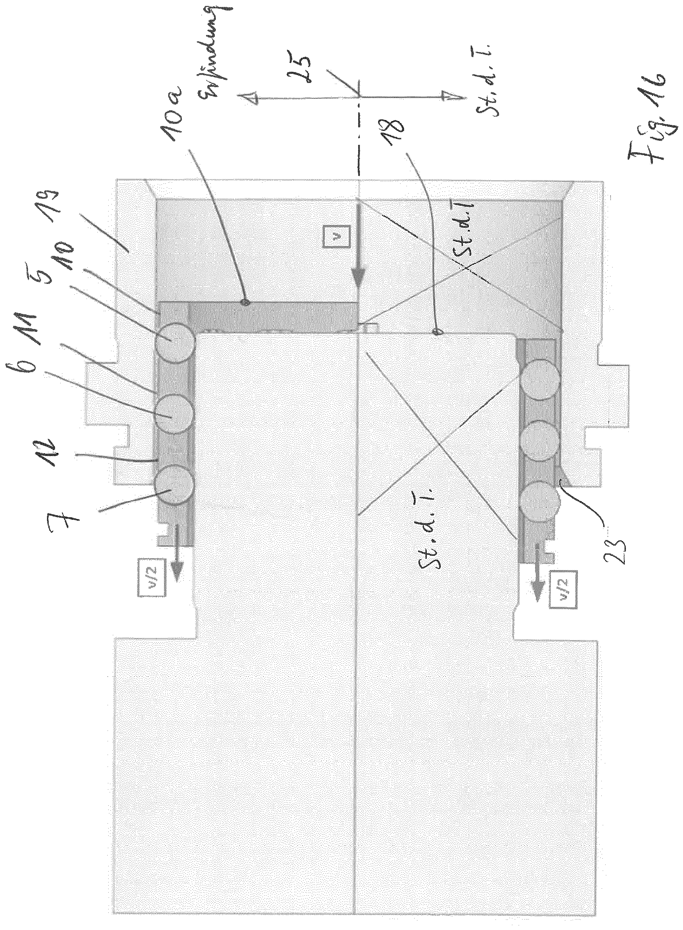

Die Figur 16 ist mit dem zeichnerischen Zustand der Figur 7 beschrieben worden.

So zeigt die Figur 16 im oberen Halbschnitt, dass nun erstmals ein lastübertragender Kontakt mit allen Wälzkörperreihen 5, 6, 7 stattfindet, während - gemäß dem unteren Halbschnitt - beim Stand der Technik noch nicht alle Wälzkörperreihen lastübertragend wirken.

Hieraus ergibt sich der wesentliche Vorteil der Erfindung gegenüber dem Stand der Technik, dass nämlich schon frühzeitig eine Lastübertragung und Zentrierung über alle drei Wälzkörperreihen 5, 6, 7 in dem Zustand nach Figur 16 erfolgt, während eine solche gemeinsame Lastübertragung aller Wälzkörperreihen 5, 6, 7 beim Stand der Technik gemäß Figur 16 noch nicht vorhanden ist.

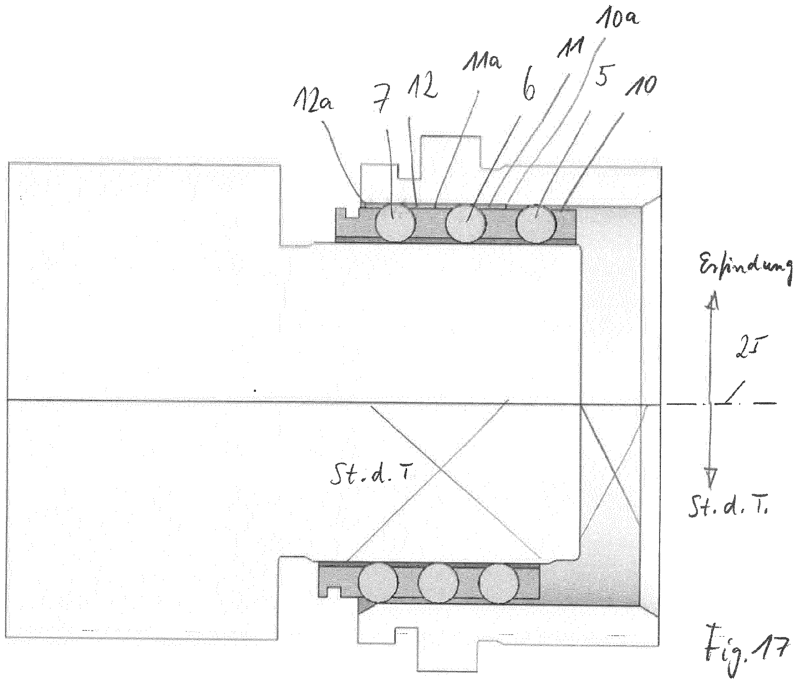

So zeigt die Figur 17 den Endzustand, bei dem alle Wälzkörperreihen 5, 6, 7 nun in der Art einer Rollpassung an ihren zugeordneten abgestuften Innenflächen 12, 11, 10 lastübertragend anliegen. Dieser Zustand ist mit der Endstellung nach Figur 9 vergleichbar und dort beschrieben.

Insgesamt ergeben sich bei der vorliegenden Erfindung wesentliche Vorteile gegenüber dem Stand der Technik, denn auf eine Hubbewegung von Wälzkörpern im Wälzkörperkäfig wird bewusst verzichtet und es werden lineare Wälzkörperbewegungen bevorzugt, die unempfindlicher gegen eingedrungene Späne und andere Fremdkörper sind. Der gleichzeitige Zentriereingriff aller Wälzkörperreihen führt zu besseren Zentrierergebnissen bei geringerem Verschleiß und längerer Lebensdauer.

### Zeichnungslegende

- 1: Zentriereinrichtung
- 2: Führungskörper
- 3: Wälzkörperkäfig
- 4: Sicherungsring
- 5: Erste Wälzkörperreihe
- 6: Zweite Wälzkörperreihe
- 7: Dritte Wälzkörperreihe
- 8: Druckstempel
- 9: Stirnkante (von 20)
- 10: Innenfläche (von 19)
- 10a: Übergangskante
- 11: Innenfläche (von 19)
- 11a: Übergangskante
- 12: Innenfläche (von 19)
- 12a: Übergangskante
- 13: Druckfeder
- 14: Sackbohrung
- 15: Lauffläche
- 16: Wälzkörper (von 5, 6, 7)
- 17: Positionsmittel (8, 13, 14)
- 18: Stirnkante (von 3)
- 19: Führungshülse
- 20: Führungsbolzen
- 21: Innenumfang (von 19)
- 22: Spiel (zwischen 5 und 12)
- 23: Einlaufschräge (von 19)
- 24: Spiel
- 25: Schnittlinie
- 26: Pfeilrichtung

## Patentansprüche

1. Zentriereinrichtung (1) für ein Formwerkzeug, insbesondere für ein Spritzgieß- oder Formblas- oder Druckgießwerkzeug, bestehend aus zwei gegeneinander gerichteten und formschlüssig miteinander verbindbaren Formhälften, welche durch Führungs- und Antriebsmittel geführt von einer geschlossenen Position in eine geöffnete Position und umgekehrt bewegbar sind, wobei die Zentriereinrichtung (1) aus mehreren, an der ersten Formhälfte vorstehend und der Trennfläche des Formwerkzeugs verteilt angeordneten Führungskörpern (2) besteht, wobei jeweils am vorderen Ende des Führungskörpers (2) ein axial gerichteter Führungsbolzen (20) angeformt ist, auf dessen Außenumfang ein Wälzkörperkäfig (3) mit mehreren Wälzkörpern (16) angeordnet sind, die in axialer Richtung hintereinander liegende und im gegenseitigen Abstand angeordnete Wälzkörperreihen (5-7) bilden, die sich beim Schließen der Formhälften lastübertragend an einer zugeordneten Innenfläche der Führungshülse (19) anlegen, **dadurch gekennzeichnet, dass** im Zustand kurz vor Erreichung der Zentrierung bis zur Endstellung der Zentrierung alle Wälzkörperreihen (5-7) parallel in Eingriff mit den hülsenseitigen Innenflächen (10-12) der Führungshülse (19) kommen und dadurch die Lagerkräfte aller Wälzkörperreihen (5-7) in diesem Fahrzustand gleichzeitig von der Führungshülse (19) aufnehmbar sind.

2. Zentriereinrichtung nach Anspruch 1, **dadurch gekennzeichnet, dass** die hülsenseitige Innenfläche der Führungshülse (19) in mehrere, axial aneinander anschließende, im Durchmesser abgestufte Innenflächen (10-12) unterteilt ist, die einen unterschiedlichen Innendurchmesser aufweisen, und dass die an diesen Innenflächen (10, 11, 12) sich abwälzenden Wälzkörper (16a, 16b, 16c) der Wälzkörperreihen (5, 6, 7) einen zu den abgestuften Innenflächen (10, 11, 12) der Führungshülse (19) komplementären Durchmesser aufweisen.

3. Zentriereinrichtung nach Anspruch 1 oder 2, **dadurch gekennzeichnet, dass** der Durchmesser der Wälzkörper (16c, 16b, 16a) von der vorderen Stirnkante des Führungsbolzens (20) gesehen nach hinten abgestuft zunimmt und dass der Innendurchmesser der den Wälzkörpern (16c, 16b, 16a) zugeordneten hülsenseitigen Innenflächen (10-12) von der Einlaufkante (23) der Führungshülse (19) gesehen nach hinten komplementär abgestuft abnimmt.

4. Zentriereinrichtung nach einem der Ansprüche 1 bis 3, **dadurch gekennzeichnet, dass** insgesamt zwei oder mehr hintereinanderliegend angeordnete Wälzkörperreihen (5-7) mit zwei oder mehr hülsenseitig angeordneten abgestuften Innenflächen (10-12) zusammenwirken.

5. Zentriereinrichtung nach einem der Ansprüche 1 bis 4, **dadurch gekennzeichnet, dass** die nächst der eingangsseitigen Stirnkante (18) der Führungshülse (19) angeordnete erste Innenfläche (12) einen gegenüber der nachfolgend angeordneten zweiten Innenfläche (11) und diese gegenüber der nachfolgenden dritten Innenfläche (10) jeweils einen abgestuften, verminderten Innendurchmesser bildet und dass die in einem Wälzkörperkäfig (3) angeordneten Wälzkörper (16) mehrere im Abstand hintereinander angeordnete Wälzkörperreihen (5, 6, 7) bilden, von denen die Wälzkörper (16c) der in Einfahrrichtung vordersten Wälzkörperreihe (5) einen kleineren Durchmesser als die Wälzkörper (16b) der dahinter folgenden Wälzkörperreihe (6) aufweisen und dass die danach folgenden Wälzkörper (16a) der hinteren Wälzkörperreihe (7) den größten Durchmesser aufweisen.

6. Zentriereinrichtung nach einem der Ansprüche 1 bis 5, **dadurch gekennzeichnet, dass** die Wälzkörper (16a-16c) der Wälzkörperreihen (5-7) beim Schluss der beiden Formenhälften auf dem Führungsbolzen (20) und den Innenflächen (10-12) der Führungshülse während einer bestimmten Fahrlänge lastübertragend aufliegen.

7. Zentriereinrichtung nach einem der Ansprüche 1 bis 6, **dadurch gekennzeichnet, dass** während des Schließens der Formhälften zunächst die erste und danach die zweite Wälzkörperreihe (5, 6) des Führungsbolzens (20) unter Beibehaltung eines radialen Spiels auf die einlaufseitigen, abgestuften Innenflächen (12, 11) der Führungshülse (19) einfahren.

8. Zentriereinrichtung nach Anspruch 7, **dadurch gekennzeichnet, dass** während der spielbehafteten Überfahrung der einlaufseitigen Innenflächen (12,11) der Wälzkörperkäfig stehen bleibt.

9. Zentriereinrichtung nach Anspruch 7 oder 8, **dadurch gekennzeichnet, dass** mit fortschreitender Einfahrbewegung die hintere Wälzkörperreihe (7) auf der in Einfahrrichtung vorne liegenden Innenfläche (12) der Führungshülse (19) aufläuft und sich dort lastübertragend anlegt und dass sich dabei die beiden vorderen Wälzkörperreihen (5, 6) an den ihnen zugeordneten, hinteren hülsenseitigen Innenflächen (11, 10) lastübertragend anlegen.

10. Zentriereinrichtung nach Anspruch 9, **dadurch gekennzeichnet, dass** beim Verfahren der Führungshülse (19) der Wälzkörperkäfig (3) mitgenommen wird.

11. Zentriereinrichtung nach einem der Ansprüche 1 bis 10, **dadurch gekennzeichnet, dass** der Durchmesser der Wälzkörper (16a-16c) um 0,05 mm pro Wälzkörperreihe (5-7) ansteigt und dass der Innendurchmesser der Innenflächen (10-12) der Führungshülse komplementär um jeweils 0,05 mm pro Innenfläche abnimmt.

12. Zentriereinrichtung nach einem der Ansprüche 1 bis 11, **dadurch gekennzeichnet, dass** der Wälzkörperkäfig (3) so auf dem Führungsbolzen (20) positioniert ist, dass die vorderste Wälzkörperreihe (5) einen Abstand von bevorzugt im Bereich zwischen 0,5 mm bis 1 mm von der vorderen Stirnkante (9) des Führungsbolzens (20) hat.

13. Zentriereinrichtung nach einem der Ansprüche 1 bis 12, **dadurch gekennzeichnet, dass** bei vollständigem Einlaufen der Wälzkörperreihen (5-7) auf den zugeordneten, hülsenseitigen Innenflächen (10-12) alle drei Wälzkörperreihen beinahe gleichzeitig in Eingriff mit den Innenflächen (10.-12) kommen und der Wälzkörperkäfig beginnt, sich mit der halben Geschwindigkeit der Führungshülse (19) zu bewegen, sodass auftretende Zentrierkräfte beinahe gleichzeitig von allen Wälzkörperreihen (5-7) aufnehmbar sind.

14. Zentriereinrichtung nach einem der Ansprüche 1 bis 13 **dadurch gekennzeichnet, dass** in einer bevorzugten Ausführungsform der Durchmesser der vorderen bolzenseitigen Wälzkörper (16c) der vorderen Wälzkörperreihe (5) bevorzugt 3,90 mm beträgt und dass der Durchmesser der zugeordneten Innenfläche (10) der Führungshülse (19) als Rollpassung bevorzugt auf 39,8 mm ausgelegt ist.

15. Zentriereinrichtung nach Anspruch 14, **dadurch gekennzeichnet, dass** der Durchmesser der mittleren Wälzkörper (16b) der mittleren Wälzkörperreihe (6) bevorzugt 3,95 mm beträgt und dass der Durchmesser der zugeordneten Innenfläche (11) der Führungshülse (19) als Rollpassung auf bevorzugt 39,90 mm ausgelegt ist.

16. Zentriereinrichtung nach Anspruch 14 oder 15, **dadurch gekennzeichnet, dass** der Durchmesser der hinteren Wälzkörper (16a) der hinteren Wälzkörperreihe (7) bevorzugt 4,0 mm beträgt und dass der Durchmesser der zugeordneten Innenfläche (12) der Führungshülse (19) als Rollpassung auf bevorzugt 40,0 mm ausgelegt ist.

17. Zentriereinrichtung nach einem der Ansprüche 1 bis 16, **dadurch gekennzeichnet, dass** der Verfahrweg, während dessen eine spielfreie Lastübertragung zwischen allen Wälzkörperreihen (5-7) und den hülsenseitigen Innenflächen (10-12) stattfindet, bevorzugt 14 mm beträgt.

18. Zentriereinrichtung nach einem der Ansprüche 1 bis 18, **dadurch gekennzeichnet, dass** mehr als zwei bolzenseitige Wälzkörperreihen (5-7) beinahe gleichzeitig in Eingriff mit den hülsenseitigen Innenflächen (10-12) der Führungshülse (19) kommen und dadurch die Kräfte von drei oder mehr Wälzkörperreihen (5-7) beinahe gleichzeitig vom Führungsbolzen (20) aufnehmbar sind.

## Geänderte Patentansprüche

### Geänderte Patentansprüche gemäss Regel 137(2) EPÜ.

1. Zentriereinrichtung (1) für ein Formwerkzeug, insbesondere für ein Spritzgieß- oder Formblas- oder Druckgießwerkzeug, bestehend aus zwei gegeneinander gerichteten und formschlüssig miteinander verbindbaren Formhälften, welche durch Führungs- und Antriebsmittel geführt von einer geschlossenen Position in eine geöffnete Position und umgekehrt bewegbar sind, wobei die Zentriereinrichtung (1) aus mehreren, an der ersten Formhälfte vorstehend und der Trennfläche des Formwerkzeugs verteilt angeordneten Führungskörpern (2) besteht, wobei jeweils am vorderen Ende des Führungskörpers (2) ein axial gerichteter Führungsbolzen (20) angeformt ist, auf dessen Außenumfang ein Wälzkörperkäfig (3) mit mehreren Wälzkörpern (16) angeordnet sind, die in axialer Richtung hintereinander liegende und im gegenseitigen Abstand angeordnete Wälzkörperreihen (5-7) bilden, die sich beim Schließen der Formhälften lastübertragend an einer zugeordneten Innenfläche der Führungshülse (19) anlegen, **dadurch gekennzeichnet, dass** im Zustand kurz vor Erreichung der Zentrierung bis zur Endstellung der Zentrierung alle Wälzkörperreihen (5-7) parallel in Eingriff mit den hülsenseitigen Innenflächen (10-12) der Führungshülse (19) kommen und dadurch die Lagerkräfte aller Wälzkörperreihen (5-7) in diesem Fahrzustand gleichzeitig von der Führungshülse (19) aufnehmbar sind und eine Lastübertragung und Zentrierung über alle Wälzkörperreihen (5-7) erfolgt.

2. Zentriereinrichtung (1) für ein Formwerkzeug, insbesondere für ein Spritzgieß- oder Formblas- oder Druckgießwerkzeug, bestehend aus zwei gegeneinander gerichteten und formschlüssig miteinander verbindbaren Formhälften, welche durch Führungs- und Antriebsmittel geführt von einer geschlossenen Position in eine geöffnete Position und umgekehrt bewegbar sind, wobei die Zentriereinrichtung (1) aus mehreren, an der ersten Formhälfte vorstehend und der Trennfläche des Formwerkzeugs verteilt angeordneten Führungskörpern (2) besteht, wobei jeweils am vorderen Ende des Führungskörpers (2) ein axial gerichteter Führungsbolzen (20) angeformt ist, auf dessen Außenumfang ein Wälzkörperkäfig (3) mit mehreren Wälzkörpern (16) angeordnet sind, die in axialer Richtung hintereinander liegende und im gegenseitigen Abstand angeordnete Wälzkörperreihen (5-7) bilden, die sich beim Schließen der Formhälften lastübertragend an einer zugeordneten Innenfläche der Führungshülse (19) anlegen,, **dadurch gekennzeichnet, dass** die hülsenseitige Innenfläche der Führungshülse (19) in mehrere, axial aneinander anschließende, im Durchmesser abgestufte Innenflächen (10-12) unterteilt ist, die einen unterschiedlichen Innendurchmesser aufweisen, und dass die an diesen Innenflächen (10, 11, 12) sich abwälzenden Wälzkörper (16a, 16b, 16c) der Wälzkörperreihen (5, 6, 7) einen zu den abgestuften Innenflächen (10, 11, 12) der Führungshülse (19) komplementären Durchmesser aufweisen.

3. Zentriereinrichtung nach Anspruch 1 oder 2, **dadurch gekennzeichnet, dass** der Durchmesser der Wälzkörper (16c, 16b, 16a) von der vorderen Stirnkante des Führungsbolzens (20) gesehen nach hinten abgestuft zunimmt und dass der Innendurchmesser der den Wälzkörpern (16c, 16b, 16a) zugeordneten hülsenseitigen Innenflächen (10-12) von der Einlaufkante (23) der Führungshülse (19) gesehen nach hinten komplementär abgestuft abnimmt.

4. Zentriereinrichtung nach einem der Ansprüche 1 bis 3, **dadurch gekennzeichnet, dass** insgesamt zwei oder mehr hintereinanderliegend angeordnete Wälzkörperreihen (5-7) mit zwei oder mehr hülsenseitig angeordneten abgestuften Innenflächen (10-12) zusammenwirken.

5. Zentriereinrichtung nach einem der Ansprüche 1 bis 4, **dadurch gekennzeichnet, dass** die nächst der eingangsseitigen Stirnkante (18) der Führungshülse (19) angeordnete erste Innenfläche (12) einen gegenüber der nachfolgend angeordneten zweiten Innenfläche (11) und diese gegenüber der nachfolgenden dritten Innenfläche (10) jeweils einen abgestuften, verminderten Innendurchmesser bildet und dass die in einem Wälzkörperkäfig (3) angeordneten Wälzkörper (16) mehrere im Abstand hintereinander angeordnete Wälzkörperreihen (5, 6, 7) bilden, von denen die Wälzkörper (16c) der in Einfahrrichtung vordersten Wälzkörperreihe (5) einen kleineren Durchmesser als die Wälzkörper (16b) der dahinter folgenden Wälzkörperreihe (6) aufweisen und dass die danach folgenden Wälzkörper (16a) der hinteren Wälzkörperreihe (7) den größten Durchmesser aufweisen.

6. Zentriereinrichtung nach einem der Ansprüche 1 bis 5, **dadurch gekennzeichnet, dass** die Wälzkörper (16a-16c) der Wälzkörperreihen (5-7) beim Schluss der beiden Formenhälften auf dem Führungsbolzen (20) und den Innenflächen (10-12) der Führungshülse während einer bestimmten Fahrlänge lastübertragend aufliegen.

7. Zentriereinrichtung nach einem der Ansprüche 1 bis 6, **dadurch gekennzeichnet, dass** während des Schließens der Formhälften zunächst die erste und danach die zweite Wälzkörperreihe (5, 6) des Führungsbolzens (20) unter Beibehaltung eines radialen Spiels auf die einlaufseitigen, abgestuften Innenflächen (12, 11) der Führungshülse (19) einfahren.

8. Zentriereinrichtung nach Anspruch 7, **dadurch gekennzeichnet, dass** während der spielbehafteten Überfahrung der einlaufseitigen Innenflächen (12,11) der Wälzkörperkäfig stehen bleibt.

9. Zentriereinrichtung nach Anspruch 7 oder 8, **dadurch gekennzeichnet, dass** mit fortschreitender Einfahrbewegung die hintere Wälzkörperreihe (7) auf der in Einfahrrichtung vorne liegenden Innenfläche (12) der Führungshülse (19) aufläuft und sich dort lastübertragend anlegt und dass sich dabei die beiden vorderen Wälzkörperreihen (5, 6) an den ihnen zugeordneten, hinteren hülsenseitigen Innenflächen (11, 10) lastübertragend anlegen.

10. Zentriereinrichtung nach Anspruch 9, **dadurch gekennzeichnet, dass** beim Verfahren der Führungshülse (19) der Wälzkörperkäfig (3) mitgenommen wird.

11. Zentriereinrichtung nach einem der Ansprüche 1 bis 10, **dadurch gekennzeichnet, dass** der Durchmesser der Wälzkörper (16a-16c) um 0,05 mm pro Wälzkörperreihe (5-7) ansteigt und dass der Innendurchmesser der Innenflächen (10-12) der Führungshülse komplementär um jeweils 0,05 mm pro Innenfläche abnimmt.

12. Zentriereinrichtung nach einem der Ansprüche 1 bis 11, **dadurch gekennzeichnet, dass** der Wälzkörperkäfig (3) so auf dem Führungsbolzen (20) positioniert ist, dass die vorderste Wälzkörperreihe (5) einen Abstand von bevorzugt im Bereich zwischen 0,5 mm bis 1 mm von der vorderen Stirnkante (9) des Führungsbolzens (20) hat.

13. Zentriereinrichtung nach einem der Ansprüche 1 bis 12, **dadurch gekennzeichnet, dass** bei vollständigem Einlaufen der Wälzkörperreihen (5-7) auf den zugeordneten, hülsenseitigen Innenflächen (10-12) alle drei Wälzkörperreihen beinahe gleichzeitig in Eingriff mit den Innenflächen (10.-12) kommen und der Wälzkörperkäfig beginnt, sich mit der halben Geschwindigkeit der Führungshülse (19) zu bewegen, sodass auftretende Zentrierkräfte beinahe gleichzeitig von allen Wälzkörperreihen (5-7) aufnehmbar sind.

14. Zentriereinrichtung nach einem der Ansprüche 1 bis 13 **dadurch gekennzeichnet, dass** in einer bevorzugten Ausführungsform der Durchmesser der vorderen bolzenseitigen Wälzkörper (16c) der vorderen Wälzkörperreihe (5) bevorzugt 3,90 mm beträgt und dass der Durchmesser der zugeordneten Innenfläche (10) der Führungshülse (19) als Rollpassung bevorzugt auf 39,8 mm ausgelegt ist.

15. Zentriereinrichtung nach Anspruch 14, **dadurch gekennzeichnet, dass** der Durchmesser der mittleren Wälzkörper (16b) der mittleren Wälzkörperreihe (6) bevorzugt 3,95 mm beträgt und dass der Durchmesser der zugeordneten Innenfläche (11) der Führungshülse (19) als Rollpassung auf bevorzugt 39,90 mm ausgelegt ist.

16. Zentriereinrichtung nach Anspruch 14 oder 15, **dadurch gekennzeichnet, dass** der Durchmesser der hinteren Wälzkörper (16a) der hinteren Wälzkörperreihe (7) bevorzugt 4,0 mm beträgt und dass der Durchmesser der zugeordneten Innenfläche (12) der Führungshülse (19) als Rollpassung auf bevorzugt 40,0 mm ausgelegt ist.

17. Zentriereinrichtung nach einem der Ansprüche 1 bis 16, **dadurch gekennzeichnet, dass** der Verfahrweg, während dessen eine spielfreie Lastübertragung zwischen allen Wälzkörperreihen (5-7) und den hülsenseitigen Innenflächen (10-12) stattfindet, bevorzugt 14 mm beträgt.

18. Zentriereinrichtung nach einem der Ansprüche 1 bis 18, **dadurch gekennzeichnet, dass** mehr als zwei bolzenseitige Wälzkörperreihen (5-7) beinahe gleichzeitig in Eingriff mit den hülsenseitigen Innenflächen (10-12) der Führungshülse (19) kommen und dadurch die Kräfte von drei oder mehr Wälzkörperreihen (5-7) beinahe gleichzeitig vom Führungsbolzen (20) aufnehmbar sind.
